# EUROPÄISCHE PATENTANMELDUNG

(11) **EP 2 839 889 A1**
(43) Veröffentlichungstag der Anmeldung: **25.02.2015**
(21) Anmeldenummer: 14181609.0
(22) Anmeldetag: 20.08.2014
(51) Int. Cl.: B08B 1/00, G01N 1/02

(54) **Vorrichtung zur wischenden Beseitigung von Oberflächenverunreinigungen sowie zur wischenden Entnahme analytischer Proben**

(30) Priorität: 20.08.2013 EP 13004108
(71) Anmelder: Labuda, Winfried, 23611 Bad Schwartau (DE); Labuda, Yuko, 23611 Bad Schwartau (DE)
(72) Erfinder: Labuda, Winfried, 23611 Bad Schwartau (DE)
(74) Vertreter: Pfenning, Meinig & Partner GbR

(57) **Zusammenfassung**

Eine Vorrichtung an der mindestens einer Stirnkantenfläche mindestens eines plattenförmigen Elements (3) oder mindestens einer Platte mindestens ein Wisch- oder Reinigungselement (4) an einer Stirnkante mindestens eines plattenförmigen Elementes oder mindestens einer Platte mindestens ein Reinigungselement so befestigt ist, dass es teilweise über die Stirnkantenfläche des mindestens einen plattenförmigen Elementes oder der mindestens einen Platte hinausragt. Der überstehende Teil des/der Wisch- oder Reinigungselemente(s) kann so mit einer Oberfläche (1) in Kontakt gebracht werden kann, um im Zuge einer Relativbewegung zwischen Objektoberfläche und Wisch- oder Reinigungselement bei gleichzeitiger Ausübung einer senkrecht zur Oberfläche wirkenden Kraft die nachhaltige Anlagerung von auf der Oberfläche befindlichen für eine Analyse vorgesehene organische oder anorganische Stoffe, Mikroorganismen, Endtoxine oder an das/die Wisch- oder Reinigungselement(e) und so den dortigen Verbleib bewirkt.

## Beschreibung

### Technisches Gebiet

Die Erfindung betrifft eine Vorrichtung zur wischenden Beseitigung von Oberflächenverunreinigungen sowie zur wischenden Entnahme analytischer Proben. Es ist ein Einsatz bei glatten, zumindest in einer Dimension ebenen Oberflächen vorgesehen.

Viele technische Apparate und Bauteile bedürfen zur Herbeiführung, Erhaltung oder Wiederherbeiführung ihrer uneingeschränkten Funktionalität der gelegentlichen Reinigung ihrer optisch wirksamen Oberflächen, wie beispielsweise der Bild-Sensoren von Digitalkameras. Die vorliegende Erfindung wird nachstehend zwar anhand von Beispielen betreffend die Reinigung von Digitalkamera-Sensoren erläutert, sie bezieht sich jedoch im erweiterten Sinne auf die Fein- und Präzisionsreinigung von glatten, technischen Oberflächen ganz allgemein.

### Stand der Technik

Die gestellte Reinigungsaufgabe wird bisher zumeist durch wischendes Reinigen mit Hilfe von Reinigungsstäbchen, sog. "Swabs" gelöst, wie sie beispielsweise von der Photographic Solutions Inc., Orem, Utah, USA oder auch von der Visible Dust Inc., Edmonton, Alberta, Canada vertrieben werden. Letztere werden nachstehend als Beispiel für den Stand der Technik näher beschrieben: Die Reinigungsstäbchen von Visible Dust bestehen aus einem Kunststoff-Formteil mit einem dreieckig ausgeführten, an seiner breitesten Stelle ca 16 mm breiten, flach ausgebildeten Kopfteil von in etwa 0,7 mm Dicke und einem für die manuelle Führung des Stäbchens geeigneten 92 mm langen Stiel. Kopfteil mit Stiel sind als monolithisches Kunststoff-Formteil ausgeführt. Der flach ausgebildete Kopfteil ist einlagig von einem umhüllenden Gestricke aus einem Stapelgarn von ca. 0,2 mm Dicke und einer Maschendichte von etwa 480 Maschen pro cm² formschlüssig umgeben. Zur Verstärkung der dem Teil zugedachten Reinigungswirkung soll der Textilbezug des Reinigungskopfes vorschriftsgemäß mit einem flüssigen Lösungsmittel getränkt werden, dessen Vorhandensein vor Durchführung der Reinigungsarbeiten in gesonderter Form extra sicherzustellen ist. Solchermaßen präpariert wird das Reinigungsstäbchen anwendungsgemäß manuell unter Ausübung leichten Drucks wischend über die zu reinigende Objektoberfläche geführt. Dabei wird ein Teil der auf der Objektoberfläche befindlichen Verunreinigungen durch den Textilbezug absorbiert, um dort zu verbleiben. Lässt sich der gewünschte Grad an Oberflächenreinheit im Rahmen einer einzigen Reinigungsprozedur nicht erreichen, so kann die Prozedur wiederholt werden.

### Darstellung der Erfindung

Der vorliegenden Erfindung liegt die Aufgabe zugrunde, eine Vorrichtung zu schaffen, die eine am Stand der Technik gemessen höhere Reinigungseffizienz oder eine verbesserte Aufnahme von zu analysierenden Proben, bei erleichterter Transportierbarkeit derselben aufweist. Vordringlich war hier die Beseitigung der bisher zur Durchführung der Reinigungsaufgabe bestehenden Notwendigkeit des zusätzlichen Mitführens von Kleingebinden mit flüssigen, zumeist leicht entflammbaren Lösungsmitteln erforderlich oder es war keine geeignete Möglichkeit zu einer sicheren und kontaminationsfreien Aufnahme von Stoffen bzw. Partikeln für nachfolgend durchzuführende Analyse vorhanden.

Erfindungsgemäß wird die voranstehende Aufgabe mit den Merkmalen des Anspruchs 1 gelöst. Vorteilhafte Ausgestaltungen der erfindungsgemäßen Vorrichtung sind in den Unteransprüchen beschrieben.

Die Verbesserung des Standes der Technik durch die vorliegende Erfindung ergibt sich aus den nachstehend benannten erfindungsgemäßen Gestaltungsmerkmalen: Während prinzipiell alle dort beschriebenen Ausgestaltungen der Vorrichtung mit lediglich einem einzigen Wisch- oder Reinigungselement versehen sein können, kann der Einsatz mit mehr als einem Wisch- oder Reinigungselement vorteilhaft sein.

Bei einer erfindungsgemäßen Vorrichtung ist an mindestens einer Stirnkantenfläche mindestens eines plattenförmigen Elements oder mindestens einer Platte mindestens ein Wisch- oder Reinigungselement an einer Stirnkante mindestens eines plattenförmigen Elementes oder mindestens einer Platte mindestens ein Reinigungselement so befestigt ist, dass es teilweise über die Stirnkantenfläche des mindestens einen plattenförmigen Elementes oder der mindestens einen Platte hinausragt. Der überstehende Teil des/der Wisch-oder-Reinigungselemente(s) kann so mit einer Oberfläche in Kontakt gebracht werden kann, um im Zuge einer Relativbewegung zwischen Objektoberfläche und Wisch- oder Reinigungselement bei gleichzeitiger Ausübung einer senkrecht zur Oberfläche wirkenden Kraft die nachhaltige Anlagerung von auf der Oberfläche befindlichen für eine Analyse vorgesehene organische oder anorganische Stoffe, Mikroorganismen, Endtoxine oder an das/die Wisch- oder Reinigungselement(e) und so den dortigen Verbleib bewirkt.

Mindestens ein Wisch- oder Reinigungselement kann zur Aufnahme und Abgabe eines Reinigungsmittels ausgebildet sein. Es kann beispielsweise mit einem Reinigungsmittel getränkt sein bzw. werden. Ein Reinigungsmittel kann dabei ein Lösungsmittel, eine Flüssigkeit oder ein Gel sein. Es kann aber auch ein adhäsiv wirkender Stoff an bzw. in mindestens einem Wisch- oder Reinigungselement an- oder eingebracht sein. Ein adhäsiv wirkender Stoff kann lediglich die Oberfläche benetzen. Er kann aber auch vom Material eines Wisch- oder Reinigungselements aufgesaugt oder dieses Material damit getränkt sein oder vor der Nutzung getränkt oder benetzt werden.

Mit einem bereits vorab getränkten Wisch- oder Reinigungselement kann auf eine zusätzliche extra Mitführung von Reinigungsmittel oder den anderen bezeichneten Stoffen in einem externen Behältnis verzichtet werden.

Plattenförmige Elemente oder Platten können in verschiedenen Randgeometrien eingesetzt werden. Diese können beispielsweise mehreckig in Form von Drei-, Vier-, Sechs- und Mehrecken ausgebildet sein. Je nach Anzahl der Stirnkantenflächen können dann entsprechend mehrere Wisch- oder Reinigungselemente an den jeweiligen Stirnkantenflächen angeordnet und dort befestigt sein.

Vorteilhaft können Stirnkantenflächen auch an die Oberflächenkontur von zu reinigenden Oberflächen angepasst sein. Bei ebenen planaren Oberflächen sollten Stirnkantenflächen ebenfalls eine ebene planare Fläche bilden. Es kann aber auch eine Anpassung an eine Oberflächenkontur in Bezug zu einer beispielsweise gekrümmten oder gewölbten Oberflächenkontur von zu reinigenden Oberflächen berücksichtigt sein.

An einem plattenförmigen Element oder einer Platte, die zur Fixierung von mindestens einem Wisch- oder Reinigungselement genutzt wird, kann aber auch am Rand oder auf der Fläche angeordnet, mindestens eine Griffmulde oder eine zum besseren Bedienen geeignete Durchbrechung, in die beispielsweise Finger einer Hand eines Bedieners eingeführt werden können, vorhanden sein.

Ein plattenförmiges Element oder eine Platte sollte aus einem Kunststoff, einem Metall, einem Faserstoff oder einem anderem Material bestehen, dessen Biegesteifigkeit ausreichend bemessen ist, um den bei wischenden Reinigungsvorgängen oder der Entnahme von Proben normalerweise ausgeübten Kräften unter Erhalt der notwendigen Formstabilität der Vorrichtung zu widerstehen.

Die Vorrichtung sollte je nach Erfordernis dekontaminiert, gammabestrahlt, dampf-sterilisiert, einer Anti-Endotoxinbehandlung unterzogen worden sein, in einer verdampfungssicheren oder eine große Barrierewirkung gegenüber der umgebenden Atmosphäre aufweisende Folienverpackung verpackt sein.

Gestaltungsmerkmal 1: Eine rechteckige Plattenform der vorliegenden Erfindung ermöglicht im Vergleich mit einer annähernd halbkreisförmigen oder dreieckigen Form des Reinigungskopfes das Anbringen von zwei bis maximal vier Wisch- oder Reinigungselementen an einer Platte oder einem plattenförmigen Element, wobei mindestens eines der Wisch- oder Reinigungselemente bereits mit einem Lösungsmittel getränkt ist kann und an der gegenüber liegenden Seite sich eines im Trockenzustand befindet. So ist es möglich, diejenige Seite mit dem Lösungsmittel-getränkten Wisch- oder Reinigungselement zum Lösungsmittel-Auftrag auf die Objektoberfläche zu nutzen, um nach einer angemessenen Einwirkzeit mit dem auf der gegenüber liegenden Seite der Vorrichtung angebrachten Wisch- oder Reinigungselement ein reinigendes Trockenwischen durchzuführen.

Gestaltungsmerkmal 2: Mehrlagige Textilbezüge des Kopfteils bewirken eine Verbesserung des Anschmiegens des/der Wisch- oder Reinigungselemente an die Mikro-Topografie der Objektoberflächen und damit eine höhere Reinigungseffizienz.

Gestaltungsmerkmal 3: Der Einsatz von Kopfteit-Bezügen für Wisch- oder Reinigungselemente, die aus Maschenware höherer Dichte als 500, bevorzugt mehr als 800 Maschen pro cm² bzw. höherer Feinheit von Geweben oder Mikrofaser-Vliesstoffen gebildet sind, bewirkt bei förderlicher Faser- bzw. Fibrillen-Anordnung erfahrungsgemäß eine deutlich höhere Reinigungseffizienz. Es kann auch Papier eingesetzt werden.

Gestaltungsmerkmal 4: In einer weiteren erfindungsgemäßen Ausführung der Vorrichtung wird gemäß Anspruch 7 kann die relativ zur Objektoberfläche in etwa planparallel angeordnete Stirnkantenfläche der Platte zur homogenen Druckausübung auf das mehrlagig ausgeführte Wisch- oder Reinigungselement genutzt werden. Hier bietet die doppel- oder mehrlagige Gestaltung des Wisch- oder Reinigungselements bzw. der Wisch- oder Reinigungselemente wiederum eine Verbesserung des Anschmiegens des/der Wisch- oder Reinigungselemente an die Mikro-Topografie der Objektoberflächen und damit eine Erhöhung der Reinigungseffizienz. Zudem lässt sich das doppel- oder mehrlagig zwischen zwei plattenförmigen Elementen oder Platten angeordnete Wisch- oder Reinigungselement in beiden Wischrichtungen effizient nutzen.

Gestaltungsmerkmal 5: In einer weiteren erfindungsgemäßen Ausführung der Vorrichtung besteht das Wisch- oder Reinigungselement bzw. die Wisch- oder Reinigungselemente bestehen aus einem der Länge nach etwa bis zur halben Höhe mittig geschlitzten Mikrofaser-Nadelfilz-Block, reinigungswirksamen Schaumstoff-Block, ggf. auch aus PVA-Schaum oder reinigungswirksam beflockten Schaumstoff-Block, der mit der Schlitzöffnung über ein plattenförmiges Element oder eine Platte gestülpt und in dieser Position befestigt ist. Diese Gestaltung erlaubt eine besonders zeitsparende Montage der Wisch-oder Reinigungselemente.

Gestaltungsmerkmal 6: Die Verpackung der Vorrichtung im Lösungsmittel - getränkten oder teilgetränkten Zustand erlaubt es, zum Einsatz derselben auf das Mitführen von Lösungsmittel in Fläschchen zu verzichten.

### Kurzbeschreibung der Zeichnungen

### Erläuterung der Zeichnung anhand des Anspruch 1:

Anmerkung: Die Vorrichtung ist in ihrer Grundform und ihren diversen erfindungsgemäßen Ausgestaltungen zeichnerisch der Einfachheit halber bei einer Reihe von Figuren lediglich mit einem einzigen Wisch- oder Reinigungselement gezeichnet. Alle Ausführungen der Erfindung können jedoch zumindest mit zwei, auch unterschiedlich gearteten Reinigungsköpfen versehen sein.

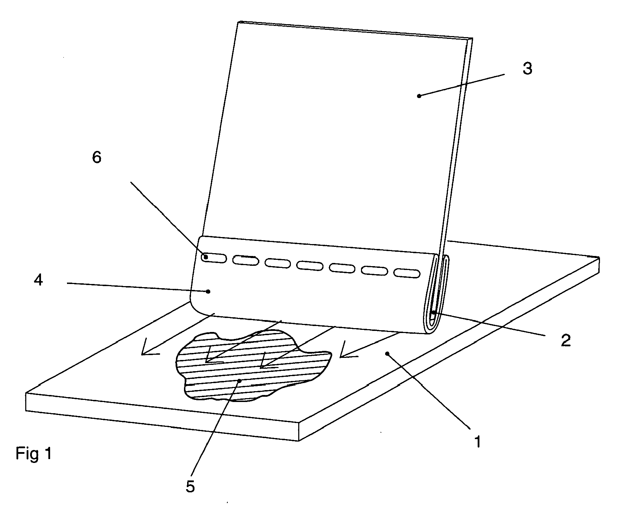

Die Figur 1 zeigt an mindestens einer Stirnkantenfläche 2 einer oder mehrerer rechteckig ausgebildeter plattenförmiger Elemente oder Platten 3 ist ein

Wisch- oder Reinigungselement 4 befestigt, so dass es im Zuge einer Relativbewegung zwischen Objektoberfläche 1 und Wisch- oder Reinigungselement 4 bei gleichzeitiger Ausübung einer senkrecht zur Objektoberfläche 1 wirkenden Kraft zum Transfer von auf der Oberfläche 1 befindlicher Verunreinigungen 5 zum Wisch- oder Reinigungselement 4 und zum dortigen Verbleib kommt.

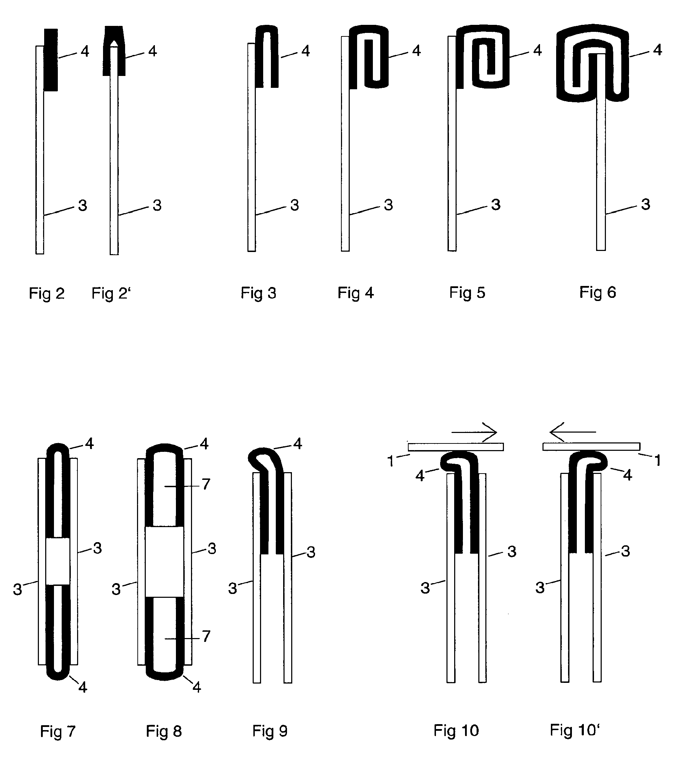

Figur 2 zeigt ein Wisch- oder Reinigungselement 4 entsprechend Anspruch 4, bei dem das Wisch- oder Reinigungselement 4 an einem plattenförmigen Element 3 befestigt ist und ein Teil davon über eine Stirnkantenfläche des plattenförmigen Elements 3 unter Wahrung eines Überstands über den Rand hinaus ragt. Dabei kann das Wisch- oder Reinigungselement 4 einseitig durch Nähnaht formschlüssig, durch Kunststoff-Schweißnaht, Ultraschall-Schweißnaht oder adhäsives Fügen, z.B. Klebung am plattenförmigen Element 3 stoffschlüssig befestigt sein.

Die Figur 2' zeigt ein Wisch- oder Reinigungselement 4 nach Anspruch 1,2 und 4. Es ist unter Wahrung eines Überstands über den Rand des plattenförmigen Elements 3 hinaus in seiner Längsrichtung mittig bis etwa zu seiner halben Höhe geschlitzt, über den Rand der Stirnkantenfläche des plattenförmigen Elements 3 gestülpt, so dass das plattenförmige Element 3 im Bereich der Stirnkante vom Wisch- oder Reinigungselementmaterial umgriffen ist. Es kann ebenfalls durch Nähnaht, Schweißnaht, Ultraschall-Schweißnaht oder Klebung an der Platte befestigt worden sein.

In den Figuren 3 bis 5 sind mehrlagig ausgeführte Wisch- oder Reinigungselemente 4 mit verschiedener Lagenzahl gemäß der Ansprüche 1 bis 3, 5 und 8 gezeigt.

Ein fünflagig ausgeführtes Wisch- oder Reinigungselement 4 gemäß der Ansprüche 1 bis 3 und 5 mit mittig versetzter Anordnung ist in Figur 6 gezeigt. Es kann gemäß Anspruch 8 am plattenförmigen Element 3 befestigt sein.

Die Figur 7 zeigt zweilagig ausgeführte Wisch- oder Reinigungselemente 4, die bei großflächiger Abdeckung zwischen zwei plattenförmigen Elementen 3 fixiert sind und dabei teilweise über die äußeren Stirnseitenkanten der beiden plattenförmigen Elemente 3 überstehen (s. Anspruch

Mit Figur 8 soll eine Möglichkeit mit zweilagig ausgeführten Wisch- oder Reinigungselementen 4 bei großflächiger Abdeckung plattenförmiger Elemente 3 und Einfügung von Mittenplatten 7 zur Vergrößerung der aktiven Reinigungsflächen der Wisch- oder Reinigungselemente 4 verdeutlicht werden.

Die Figur 9 zeigt zweilagig ein ausgeführtes Wisch- oder Reinigungselement 4 gemäß der Ansprüche 1 und 2, das zwischen zwei plattenförmigen Elementen 3 klemmend fixiert ist und ein zweilagiger über die Stirnkantenflächen der plattenförmigen Elemente 3 überstehender Bereich des Wisch- oder Reinigungselements 4 vorhanden ist, der zu Reinigungszwecken nutzbar ist. Dies ist für zwei Wisch- oder Reinigungselemente 4 in Figur 7 gezeigt.

Den Figuren 10 und 10' ist die Verformung des außen liegenden über die stirnkantenflächen von plattenförmigen Elementen 3 überstehenden Teils eines Wisch- oder Reinigungselements 4 nach Figur 9 beim Wischvorgang in eine bestimmte Richtung und in die Gegenrichtung zu entnehmen.

Die Figur 11 zeigt ein vierlagig ausgeführtes Wisch- oder Reinigungselement 4 gemäß der Ansprüche 1 bis 3, 5 und 8 mit seitlicher Schlitz-Anordnung zur Gewährleistung einer zweilagigen Kantenumschließung einer Stirnkantenfläche eines plattenförmigen Elements 3.

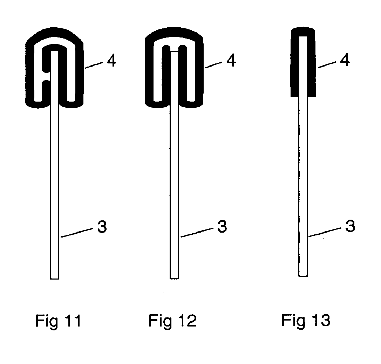

Ein vierlagig ausgeführtes Wisch- oder Reinigungselement 4 mit einlagiger Stirnkantenflächenumschließung gemäß der Ansprüche 1 bis 3, 5 und 8, jedoch mit erhöhter Abfederung im Kantenbereich durch Kantenüberschreitende Enden des Wisch- oder Reinigungselements 4 soll mit Figur 12 verdeutlicht werden.

In Figur 13 ist ein zweilagig ausgeführtes Wisch- oder Reinigungselement 4 mit einlagiger Stirnkantenflächenumschließung gezeigt.

Nachfolgend sollen Beispiele von Materialien, die bei der Erfindung eingesetzt werden können, genannt werden. Diese stellen jedoch keine endgültige Aufzählung geeigneter Materialien dar.

### Plattenförmige Elemente:

Typ: Priplak 0,7 mm dick, Zuschnitte nach Größen-Bedarf, Hersteller: Priplak SAS, Avenue de l'Europe, 60530 Neuilly en Thelle, Frankreich, textile Wisch- oder Reinigungselemente (Gestrick und Vlies): Rohmaterial: Typ Microweb UD-G (EC), Hersteller Clear & Clean Werk für Reintechnik GmbH, Niels-Bohr-Ring 36, 23568 Lübeck, Deutschland.

textile Wisch- oder Reinigungselemente (Filz): Rohmaterial: Nadelfilz - Abschnitt aus Polyester- Mikrofasern dicht genadelt, BWF Tec GmbH & Co KG, Wilhelm-Maybach-Str. 5, 95028 Hof-Gattendorf

Flachbeutel aus Aluminium-Verbundfolie: große Auswahl bei Fa. "Long Life for Art" - Christoph Waller, Hauptstraße 47, D-79356 Eichstetten.

Verpackungs-Siegelnaht : (Siegeltemperatur: 150 Grad C, Siegeldruck 5 bar, Siegelzeit 1s) Siegelgerät 1: Wusing Typ 300 AL erhältlich bei Christoph Waller, Hauptstraße 47, D-79356 Eichstetten. Siegelgerät 2: Typ SGPE 20 mit Coldund Hottrack, Willy Kopp e.K., Verpackungssysteme, Ulmer Strasse 51-53, D-73262 Reichenbach.

Lösungsmittel: Methanol - chem. Formel CH30H - Typ "EMPARTA" Fa. Merck Darmstadt, Frankfurter Str. 250, 64293 Darmstadt,

Garn (weiss) zur Herstellung der verbindenden Naht zwischen Platte und Wisch- oder Reinigungselement/en: Nähmaschinengarn Polyester 0,4 mm aus dem einschlägigen Nähzubehör- Handel.

## Patentansprüche

1. Vorrichtung zur wischenden Beseitigung von Oberflächenverunreinigungen sowie zur wischenden Entnahme analytischer Proben von glatten, zumindest in einer Dimension ebener Oberflächen
**dadurch gekennzeichnet, dass**
an mindestens einer Stirnkantenfläche mindestens eines plattenförmigen Elements (3) oder mindestens einer Platte mindestens ein Wisch-oder Reinigungselement (4) an einer Stirnkante mindestens eines plattenförmigen Elementes (3) oder mindestens einer Platte mindestens ein Reinigungselement (4) so befestigt ist, dass es teilweise über die Stirnkantenfläche des mindestens einen plattenförmigen Elementes (3) oder der mindestens einen Platte hinausragt und der überstehende Teil des/der Wisch- oder_Reinigungselemente(s) (4) mit einer Oberfläche (1) in Kontakt gebracht werden kann, um im Zuge einer Relativbewegung zwischen Objektoberfläche (1) und Wisch- oder Reinigungselement (4) bei gleichzeitiger Ausübung einer senkrecht zur Oberfläche (1) wirkenden Kraft die nachhaltige Anlagerung von auf der Oberfläche (1) befindlichen für eine Analyse vorgesehene organische oder anorganische Stoffe, Mikroorganismen, Endtoxine oder an das/die Wisch-oder Reinigungselement(e) (4) und so den dortigen Verbleib bewirkt.

2. Vorrichtung nach Anspruch 1, **dadurch gekennzeichnet, dass** mindestens ein Wisch- oder Reinigungselement (4) zur Aufnahme und Abgabe eines Reinigungsmittels, eines Lösungsmittels, einer Flüssigkeit, eines adhäsiv wirkenden Stoffs oder eines Gels ausgebildet ist.

3. Vorrichtung nach Anspruch 1 oder 2, **dadurch gekennzeichnet, dass** ein plattenförmiges Element (3) oder eine Platte aus einem Kunststoff, einem Metall, einem Faserstoff oder einem anderem Material bestehen, dessen Biegesteifigkeit ausreichend bemessen ist, um den bei wischenden Reinigungsvorgängen oder der Entnahme von Proben normalerweise ausgeübten Kräften unter Erhalt der notwendigen Formstabilität der Vorrichtung zu widerstehen.

4. Vorrichtung nach einem der vorhergehenden Ansprüche, **dadurch gekennzeichnet, dass** das/die Wisch- oder Reinigungselement(e) (4) aus einem textilen Gebilde, beispielsweise einem Gestrick oder Gewirk, mit einer höheren Maschenzahl als 500 Maschen pro cm², aus einem Gewebe von vergleichbarer Gewebefeinheit oder aus einem der genannten Garnfeinheit entsprechenden Mikrofaser-Vliesstoff, Multifilament-Vliesstoff oder Papier gebildet ist.

5. Vorrichtung nach einem der vorhergehenden Ansprüche, **dadurch gekennzeichnet, dass** das/die Wisch- oder Reinigungselement(e) (4) aus einem Mikrofaser-Nadelfilz, einem reinigungswirksamen Schaumstoff-Block oder einem mit reinigungswirksamem Flock-beschichteten Schaumstoffblock gebildet ist.

6. Vorrichtung nach einem der Ansprüche 1 bis 5, **dadurch gekennzeichnet, dass** das/die Wisch- oder Reinigungselement(e) (4) aus mehreren Textillagen gebildet ist/sind, die an den die Stirnkantenflächen überschreitende Enden ein abfederndes Volumen bilden, so dass sich ein Wisch- oder Reinigungselement (4) an der Objektoberfläche (1) beim Wischvorgang innig anschmiegt.

7. Vorrichtung nach einem der Ansprüche 1 bis 6, **dadurch gekennzeichnet, dass** das/die Wisch-oder Reinigungselement(e) (4) an einem plattenförmigen Element (3) oder einer Platte derart befestigt ist/sind, dass ein kleiner Teil eines Wisch- oder Reinigungselements (4), etwa bis zur vierfachen Dicke eines einzigen plattenförmigen Elements (3) oder einer einzigen Platte, über den Plattenrand hinausragt.

8. Vorrichtung nach einem der Ansprüche 1 bis 7, **dadurch gekennzeichnet, dass** das/die Wisch- oder Reinigungselement(e) (4) zwischen zwei plattenförmigen Elementen (3) oder Platten so angeordnet ist/sind, dass zwischen den beiden plattenförmigen Elementen (3) oder Platten ein weiteres plattenförmiges Element (7) so angeordnet ist, dass eine Vergrößerung der aktiven nutzbaren Fläche eines jeweiligen Wisch-oder Reinigungselementes (4) und ein Überstehen eines Teils des jeweiligen Wisch- oder Reinigungselementes (4) über den Rand der Stirnkante der beiden plattenförmigen Elemente (3) oder Platten gegeben ist.

9. Vorrichtung nach einem der Ansprüche 1 bis 8 **dadurch gekennzeichnet, dass** das/die Wisch- oder_Reinigungselement(e) (4) an mindestens einem plattenförmigen Element (3) oder einer Platte durch eine oder mehrere Nähnähte, Kunststoff-Schweißnähte, Ultraschall-Schweißnähte oder durch adhäsives Fügen befestigt ist/sind.

10. Vorrichtung nach einem der vorhergehenden Ansprüche, **dadurch gekennzeichnet, dass** das/die Wisch- oder Reinigungselement(e) (4) der Länge nach mittig bis etwa zur halben Höhe derselben in der Längsachse geschlitzt ausgebildet ist/sind, mit der Schlitzöffnung über die jeweilige Stirnkante gestülpt und in dieser Position befestigt ist/sind.

11. Vorrichtung nach einem der vorhergehenden Ansprüche, **dadurch gekennzeichnet, dass** die Vorrichtung nach Erfordernis dekontaminiert, gammabestrahlt, dampf-sterilisiert, einer Anti-Endotoxinbehandlung unterzogen worden ist, in einer verdampfungssicheren oder eine große Barrierewirkung gegenüber der umgebenden Atmosphäre aufweisende Folienverpackung verpackt ist.

12. Vorrichtung nach einem der vorhergehenden Ansprüche, **dadurch gekennzeichnet, dass** ein plattenförmiges Element (3) oder eine Platte eine mehreckige Geometrie aufweist.

13. Vorrichtung nach einem der vorhergehenden Ansprüche, **dadurch gekennzeichnet, dass** eine Stirnkantenfläche zumindest im Bereich, indem ein Wisch-_oder Reinigungselement (4) angeordnet ist, eine ebene planare oder eine an die jeweils zu reinigende Oberfläche eine angepasste Kontur aufweist.
